(19) **Europäisches Patentamt / European Patent Office / Office européen des brevets**

(11) **EP 4 753 180 A1**

(12) # EUROPEAN PATENT APPLICATION

(43) Date of publication:
**03.06.2026 Bulletin 2026/23**

(21) Application number: **24306989.5**

(22) Date of filing: **27.11.2024**

(51) International Patent Classification (IPC):
***H04L 1/00*** (2006.01)

(52) Cooperative Patent Classification (CPC):
**H04L 1/0015**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Commissariat à l'Energie Atomique et aux Energies Alternatives**
**75015 Paris (FR)**

(72) Inventors:
- **SANA, Mohamed**
  **38054 GRENOBLE Cedex 9 (FR)**
- **CALVANESE STRINATI, Emilio**
  **38054 GRENOBLE Cedex 9 (FR)**

(74) Representative: **Germain Maureau**
**12, rue Boileau**
**69006 Lyon (FR)**

(54) **SEMANTIC CHANNEL ESTIMATION**

(57)    The present invention concerns a semantic channel estimation method for estimating the quality of a semantic channel on which a transmitter Tx and a receiver Rx establish a semantic communication for exchanging at least one semantic message including transmitter semantic information $x_i$, said transmitter semantic information $x_i$ being extracted by the transmitter $T_x$ from a data space $\mathcal{M}$ containing transmitter observable data $m_i$, said transmitter semantic information $x_i$ being extracted based on a transmitter language function $\lambda_{TX}$ that associates to each observable data $m_i$ a transmitter semantic information $x_i$, the method comprising the following steps. The present invention also concerns a semantic channel equalization method and a computer program product.

EP 4 753 180 A1

**Figure 3**

Multi-levels Common Ground Space

Level $k$

$g$

$\mathcal{G} \subset \mathbb{R}^p$

$p \ll n, q$ (compression)

Transformation $T_{\text{TX}}^{(k)}: \mathcal{X} \to \mathcal{G}$

Transformation $T_{\text{RX}}^{(k)}: \mathcal{G} \to \mathcal{Y}$

$x$

$\mathcal{X} \subset \mathbb{R}^n$

$y = T_{\text{RX}}^{(k)} \circ T_{\text{TX}}^{(k)}(x)$

$y$

$\mathcal{Y} \subset \mathbb{R}^q$

TX transmitter

RX receiver

## Description

### Technical field

The invention that belongs to the technical field of telecommunications, relates to a method for estimating a semantic channel and to a method for semantic channel equalization.

In particular, the invention relates to a semantic channel estimation method in the context of a communication system where human users and/or virtual agents using different languages, logic or internal representations need to share or exchange knowledge.

To give a few examples, the method of the present invention can be advantageously used in wireless communication systems implying for example collaborative robots or autonomous vehicles, or in augmented or extended reality environments such as Metaverse applications where a virtual copy of the physical world is created in the Metaverse digital twin by using data collected by different intelligent devices interacting on a network.

Specifically, the invention applies to multi-user semantic communications systems where cooperating or interacting agents interact through the exchange of semantic messages to convey meanings, share knowledge and cooperate to achieve a goal.

### Background

The goal of communication has long been to guarantee the correct reception of transmitted messages, irrespective of their meaning or significance.

This approach was theorized back to 1948 by Shannon who, while categorizing communication in three levels: the transmission of symbols (the technical problem), the semantic exchange of transmitted symbols (the semantic problem), and the effect of semantic information exchange (the effectiveness problem), decided to favour the first level.

In the seventy years following Shannon's work, most of the searchers and engineers specialized in the field have been paying attention mainly to the transmission of symbols, broadly neglecting the second and third levels defined by Shannon's communication theory.

That being said, recent evolutions in the field tend to question this strategy, since not only the volume of data traffic is exploding, but also the characteristics and nature of communicating objects are diversifying, which leads to the emergence of new applications and use cases with stringent requirements and complexity.

Modern communication applications taking place on a wireless medium are hence really demanding in terms of communication bandwidth, at least in part due to Shannon's approach that implies to share and/or exchange higher and higher volume of data between more and more complex devices.

As a consequence, there has been a current trend in the industry to explore higher frequencies to benefit from the available large spectrum resources.

However, this trend cyclically faces an inevitable bottleneck, represented by the hardware's cost, the complexity and energy efficiency of wireless communications. For example, as frequency increases new challenges arise in communication such as blockage, severe path-loss, atmospheric absorption, and power amplifier efficiency.

It is thus necessary to develop groundbreaking solutions to distil data and rethink intelligence transmission exchanges for enabling reliable cognition and task execution at the receiver side rather than furthermore gradually approaching to communication Shannon's limits.

In other words, there is a need for developing new communicating means and to introduce new paradigms in communication strategy in order to reduce the volume of data that have to be shared and/or exchanged in state-of-the-art communicating networks.

Semantic communications, by offering to transmit only relevant information sufficient for the receiver to capture the intented meaning, appears to be quite promising in saving significant communication bandwidth.

Also, even if the attention in the industry has long been put on how to accurately and effectively transmit symbols from the transmitter to the receiver, one understands that whenever communication occurs to convey a meaning, what matters most is the receiver's understanding of the transmitted message and not necessarily its correct reconstruction.

For these reasons, semantic communications are currently envisioned as a potential key enabler of future 6G communication networks that should be engineered to effectively recreate or infer the meaning of what has been communicated rather than to just optimize opaque data pipes aiming to reproduce exactly exchanged sequences of symbols.

Wireless semantic communication involve the use of a wireless semantic channel which is a means of transmitting information wirelessly, between a transmitter and a receiver, using a system that utilizes semantic techniques, such as natural language processing, machine learning algorithms, for the representation, interpretation, and transmission of meaning.

In the context of natural language processing and computational linguistics, semantic channels are instrumental to represent the various ways in which intelligent agents, acting as transmitters, can express their thoughts and ideas in a way that can be understood by other intelligent agents acting as receivers.

The semantic channel is used to convey to the receiver a semantic message, previously generated by a message generator pertaining to the transmitter, and that is intended to be interpreted by a message interpreter pertaining to the receiver.

As such, the logical channel influences the way knowledge is represented and selected prior to be communicated and then interpreted at the receiver's side.

In order to generate the semantic message, the message generator of the transmitter comprises a semantic extraction encoder able to encode significant information destined to the receiver, and the message interpreter of the receiver comprises a semantic interpretation decoder able to decode and retrieve said significant information.

It is important to note that correct interpretation at the receiver is not necessarily guaranteed, since semantic distortions, that can for example be caused by errors in the semantic channel, may alter the meaning of the transmitted semantic message.

In order to perform their tasks of respectively generate and interpret the semantic message, the transmitter and the receiver each uses a communication strategy which can be their own language, logic, rules or internal representations.

When the semantic channel is error free and both the transmitter and the receiver use a common communication strategy, or different but compatible communication strategies, the receiver generally correctly interprets the semantic message generated by the transmitter and the semantic channel is considered to be transparent.

On the other hand, when the transmitter and the receiver adopt different and incompatible communication strategies and even if the semantic channel is itself error free, the receiver may fail to correctly recover the meaning intended by the transmitter by incorrectly interpreting the semantic message.

In this case, the semantic channel is considered to be opaque and semantic mismatches are prone to occur and, if not taken properly into account, potentially induce semantic misalignments in the respective knowledge representation spaces of the transmitter and the receiver.

As a result, the semantic communication process undergoes distortions and/or interferences that affect the interpretation by the receiver of the transmitted semantic message and the overall quality of the transmission.

Although negatively impacting the quality of the semantic communication by introducing semantic noise that affects the correctness and effectiveness of the exchanged information, the crucial role of knowledge representation misalignments between transmitter and receiver is often neglected in the industry.

Summary

The invention aims to solve all or some of the above mentioned disadvantages.

More precisely, the main objective of the invention is to systematically guarantee correct, or at least sufficiently correct, semantic interpretation at the receiver side, especially when a transmitter and a receiver adopt different communication strategies, resulting in an opaque semantic channel.

More precisely and in order to counteract, compensate, at least in part, semantic misalignments and limit the critical ambiguity in semantic message interpretation, there is a need to estimate the semantic channel in order to adapt the overall semantic communication to such cause of semantic error.

As such, a first object of the invention is to provide a method to estimate a semantic channel via dedicated semantic pilots in order to render transparent an initially opaque semantic channel, or at least to improve the overall quality of the semantic communication taking place on said semantic channel.

According to a first aspect of the invention, the object is achieved by a semantic channel estimation method for estimating the quality of a semantic channel on which a transmitter TX and a receiver RX establish a semantic communication for exchanging at least one semantic message including transmitter semantic information $x_i$, said transmitter semantic information $x_i$ being extracted by the transmitter from a data space $\mathcal{M}$ containing transmitter observable data $m_i$, said transmitter semantic information $x_i$ being extracted based on a transmitter language function $\lambda_{TX}$ that associates to each observable data $m_i$ a transmitter semantic information $x_i$, the method comprising the following steps:

- Definition of a transmitter semantic space $\mathcal{X}$ based at least on the data space M and on the transmitter language function $\lambda_{TX}$, the transmitter semantic space $\mathcal{X}$ containing all the transmitter semantic information $x_i$ that can be extracted from the observable data $m_i$ in the data space M;

- Definition of a receiver semantic space $\mathcal{Y}$ based at least on a receiver language function $\lambda_{RX}$, the receiver semantic

space $\mathcal{Y}$ containing receiver semantic information $y_i$ that can be interpreted by the receiver, each receiver semantic information $y_i$ in the receiver semantic space Y being associated to an observable data $m_i$ in the data space M based on the receiver language function $\lambda_{RX}$ ;

- Definition of a semantic common ground space $\mathcal{G}$ based on the transmitter semantic space $X$ and the receiver semantic space Y, the semantic common ground space $\mathcal{G}$ containing common semantic information $g_i$;

- Selection of a set of transmitter-side transformations $T_{TX}$ necessary to shift from a set of transmitter semantic information $x_i$ in the transmitter semantic space $\mathcal{X}$ to a corresponding set of common semantic information $g_i$ in the semantic common ground space $\mathcal{G}$ , and of a corresponding set of receiver-side transformations $T_{RX}$ necessary to shift from the set of common semantic information $g_i$ in the semantic common ground space $\mathcal{G}$ to a corresponding set of receiver semantic information $y_i$ in the semantic space Y;

- Selection of a subset of data pertaining to the data space M as a set of representative anchors D;

- Computing of a semantic channel link quality metric depending on the set of representative anchors D, the transmitter language function $\lambda_{TX}$, the receiver language function $\lambda_{RX}$, the set of transmitter-side transformation $T_{TX}$, the set of receiver-side transformation $T_{RX}$.

Thanks to the definition of a semantic common ground space and the subsequent definition of transmitter-side transformations $T_{TX}$ and of receiver-side transformations $T_{RX}$, the semantic channel can be modelised in a simple and efficient way:

$$y = T_{\mathrm{RX}} \circ T_{\mathrm{TX}}(x)$$

Meaning that the receiver-side transformations $T_{RX}$ are applied to $T_{TX}(x)$, that is to the result of the transmitter-side transformations $T_{TX}$ applied to $x$.

Thanks to these provisions, the semantic channel can also be easily and precisely evaluated thanks to the computing of the semantic channel link quality metric that in fact allows for an actual evaluation of the selected transmitter-side transformations $T_{TX}$ and of the corresponding set of receiver-side transformations $T_{RX}$.

By evaluating said sets of transmitter-side transformations $T_{TX}$ and receiver-side transformations $T_{RX}$, the semantic channel evaluation method of the invention helps to determine if the semantic channel needs to be equalized at the transmitter-side, at the receiver-side or both.

According to one possibility, said semantic communication takes place physically on a wireless link.

By wireless link, we refer to a wireless communication medium able to wirelessly carry message between a transmitter and a receiver.

According to one possibility, the wireless link is unilateral, and able to wirelessly carry message from the transmitter to the receiver only.

According to another possibility, the wireless link is bilateral, allowing message communication in both ways: from the transmitter to the receiver and from the receiver to the transmitter.

By semantic channel, we refer to a means for conveying semantic messages between intelligent agents. The semantic channel is thus defined between at least a source or transmitter TX that transmits semantic encoded messages and at least a receiver RX that interprets semantic received messages.

In the particular context of wireless communications, the semantic channel refers to the means of transmitting information wirelessly using a system that utilises semantic techniques for the representation, interpretation, and transmission of meanings. This can include natural language processing, machine learning algorithms, and other forms of data representation that allow for the transmission of meaning over a wireless network.

By semantic message, we refer to a sequence of well-formed semantic symbols learned from the meaning underlying data, which have to be interpreted at the receiver. The exchange of semantic messages between the transmitter and the receiver requires a reasoning unit at both the transmitter side and the receiver side, which can be natural or artificial, on a knowledge base: a symbolic knowledge representation of the specific application. More broadly, a semantic message is interpretable by the receiver depending on the meaning the transmitter assigned to it.

By transmitter semantic information, we refer to transmitter's semantically selected information.

By intelligent agents, we refer to human or virtual agents with natural or artificial reasoning and processing capabilities that follow a set of possible logics or languages.

In the context of the present invention, intelligent agents can be transmitters and/or receivers.

By transmitters, we refer to electronic devices able to transmit at least one semantic message to one or more destinations or receivers that can be identified or not. In the context of semantic communications, transmitter can be referred to as teachers since they share processed version of observed data to assist one or more receivers to operate an inference task or to extract selected information. A transmitter can for example comprises at least one of a mobile terminal, a smart phone, a mobile Edge host, an Internet of Things device (IoT devices) such as an intelligent sensor (non-exhaustive list).

In the context of the present invention, the transmitter has a wireless communication unit, and an intelligence unit able to extract semantics, create and update machine learning models and operate machine learning operations.

According to one possibility, the transmitter has semantic equalization modules.

By receivers also called learners in the context of semantic communications, we refer to electronic devices able to interpret at least one semantic message in order for example to retrieve knowledge and/or operate an inference and/or generate or update a neural network model. A receiver can for example comprises at least one of a mobile terminal, a smart phone, a mobile Edge host, an Internet of Things device (IoT devices) such as an intelligent sensor (non-exhaustive list).

In the context of the present invention, the receiver has a wireless communication unit, and an intelligence unit able to interpret semantics, create or update machine learning models and operate machine learning operations.

According to one possibility, the receiver has semantic equalization modules.

In the context of the present invention, at least a transmitter and at least a receiver communicates through a semantic communication chain which comprises the semantic channel and several units or components located either at the transmitter side or the receiver side.

According to one possibility, the semantic communication chain comprises, at the transmitter side, a semantic information extractor able to extract semantic information out of observable data contained in the data space, a semantic message generator able to generate semantic symbols representative of the extracted semantic information, a channel encoder able to encode the set of semantic symbols representative of the extracted semantic information in order to generate an encoded semantic message, a modulator able to modulate the encoded semantic message in order to generate a modulated encoded semantic message and a waveform generator able to generate an electromagnetic signal able to propagate on a wireless link.

According to one possibility, the semantic communication chain comprises, at the receiver side, a demodulator able to demodulate the modulated encoded semantic message, a decoder able to decode the encoded semantic message, and a semantic message interpreter able to interpret the semantic information comprised in the semantic message.

By data space, we refer to a set of observation data that can be observed by the transmitter, and from which the transmitter is able to extract knowledge or meanings.

According to one possibility, the data space comprises a continuous data space.

According to another possibility, the data space comprises a discret data space.

By transmitter semantic space, we refer to the set of all the semantic information that can be extracted by the transmitter out of the data space.

According to one possibility, not all the data comprised in the data space are observable by the transmitter. In other word, the transmitter does not extract semantic information from some of the data comprised in the data space.

According to another possibility, all the data comprised in the data space are observable by the transmitter which is able to extract semantic information from all of these data.

According to one possibility, extracting semantic information comprises identifying the semantic concepts to be communicated to the receiver.

According to one possibility, extracting semantic information is based at least on a transmitter background knowledge space.

According to one possibility, generating semantic symbols comprises mapping the extrated semantic information into a series of semantic symbols.

According to one possibility, the transmitter operates based on a transmitter communication strategy that comprises at least the transmitter language.

According to one possibility, extracting semantic information and generating semantic symbols are executed based on the transmitter language.

By transmitter language, we refer to a set of representation rules of knowledge used by the transmitter for extracting semantic information out of observable data and generating at least one semantic message.

According to one possibility, the receiver operates based on a receiver communication strategy that comprises at least the receiver language.

According to one possibility, interpreting semantic message is done based on the receiver language.

According to one possibility, interpreting semantic message is done based on the receiver background knowledge space.

By receiver language, we refer to a set of representation rules of knowledge used by the receiver for interpreting at least one semantic message sent by a transmitter. More broadly, we generally refer by language (transmitter and/or receiver language) to a representation of information in a way that preserves meaning and facilitates understanding, processing and reasoning by natural or virtual agents.

By receiver semantic space, we refer to the set of all the semantic information that are included in the semantic messages received by the receiver, and that can be interpreted by the receiver according to its own communication strategy.

According to one possibility, the receiver language and the transmitter language are the same language (i. e. possess the same set of representation rules of knowledge)

According to another possibility, the receiver language and the transmitter language are different languages.

According to one possibility, the transmitter language function comprises a mapping function between the data space and the transmitter semantic space.

According to one possibility, the transmitter language function comprises a bijective mapping function: i.e. a one-to-one correspondance mapping associating each observable data comprised in the data space with one semantic information comprised in the transmitter semantic space.

According to another possibility, the transmitter language function comprises a one-to-many mapping fonction where a same observable data in the data space can be associated with different semantic information of the transmitter semantic space.

Acording to yet another possibility, the transmitter language function comprises a many-to-one mapping fonction where several observable data in the data space can be associated with a same semantic information in the transmitter semantic space.

The present invention specifically applies when the receiver communication strategy and the transmitter communication strategy are different, and as such when there is a mismatch between the receiver language and the transmitter language, leading to misalignments between the transmitter semantic space and the receiver semantic space.

In such cases, the definition of a semantic common ground space between transmitter and receiver is helpful in improving the overall semantic communication chain quality, for example in terms of bandwidth consumption or in terms of correct interpretation at the receiver's side of what was intented to mean at the transmitter's side.

By semantic common ground space we refer to a space containing the shared knowledge, context and understanding that both the transmitter and the receiver possess.

According to one possibility, the semantic common ground space comprises a single-level semantic common ground space. As an example, this is the case when the semantic communication between transmitter and receiver is single-level and hence has only one purpose in terms of task to be performed by the receiver. In other words, the semantic communication chain has only one possible practical application.

According to another possibility, the semantic common ground space comprises a multi-level semantic common ground space. This is the case when the semantic communication between transmitter and receiver is multi-levels and hence can result in different kind of tasks to be taken by the receiver. In other words, the semantic communication chain has several possible practical application.

According to this possibility, the semantic channel corresponding to a multi-level semantic communication can be modelised for level k as :

$$y = T_{\mathrm{RX}}^{(k)} \circ T_{\mathrm{TX}}^{(k)}(x)$$

Where:

$T_{\mathrm{TX}}^{(k)}$ refers to the set of transmitter-side transformations necessary to shift from a set of transmitter semantic information $x_i^{(k)}$ of level k in the transmitter semantic space $\mathcal{X}$ to a set of corresponding common semantic information $g_i^{(k)}$ of level k in the semantic common ground space $\mathcal{G}$ ;

$T_{\mathrm{RX}}^{(k)}$ refers to the corresponding set of receiver-side transformations necessary to shift from the set of common semantic information $g_i^{(k)}$ of level k in the semantic common ground space $\mathcal{G}$ to a corresponding set of receiver

semantic information $y_i^{(k)}$ in the receiver semantic space $\mathcal{Y}$ .

According to one embodiment, the step of computing a semantic channel link quality metric comprises the application of the following formula:

$$\mathrm{LQM}_{\mathrm{sem}} = \frac{\mu\left(T_{TX} \circ \lambda_{TX}(D) \cap T_{RX}^{-1} \circ \lambda_{RX}(D)\right)}{\mu\left(T_{TX} \circ \lambda_{TX}(D)\right)}$$

Where:

$$\mathrm{LQM}_{\mathrm{sem}} \in [0,1];$$

$\mu$ defines a probability measure over the common ground space $\mathcal{G}$ ;

$\lambda_{TX}$ (D) defines the set of transmitter semantic information in the transmitter semantic space $\mathcal{X}$ corresponding to the set of representative anchors D;

$\lambda_{RX}$ (D) defines the set of receiver semantic information in the receiver semantic space Y corresponding to the set of representative anchors D;

$T_{TX} \circ \lambda_{TX}(D)$ is an image of the set of representative anchors D in the semantic common ground space $\mathcal{G}$ , said image defining a set of semantic pilots;

$T_{RX}^{-1} \circ \lambda_{RX}(D)$ is a pre-image in the semantic common ground space $\mathcal{G}$ of the receiver semantic information corresponding to the set of representative anchors D.

When $\mathrm{LQM}_{\mathrm{sem}} = 1$, the semantic channel is considered to be fully transparent with respect to the selected set of representative anchors.
In contrast, when $\mathrm{LQM}_{\mathrm{sem}} = 0$, the semantic channel is considered to be totally opaque.
According to one possibility, the semantic common ground space comprises a multi-level semantic common ground space. According to this possibility, the formula for computing the semantic channel link quality metric for level k is:

$$\mathrm{LQM}_{\mathrm{sem}}^{(k)} = \frac{\mu\left(T_{TX}^{(k)} \circ \lambda_{TX}(D) \cap T_{RX}^{-1(k)} \circ \lambda_{RX}(D)\right)}{\mu\left(T_{TX}^{(k)} \circ \lambda_{TX}(D)\right)}$$

Where:

$$\mathrm{LQM}_{\mathrm{sem}}^{(k)} \in [0,1];$$

$\mu$ defines a probability measure over the common ground space $\mathcal{G}$ ;

$\lambda_{TX}$ (D) defines the transmitter semantic information in the transmitter semantic space $\mathcal{X}$ corresponding to the set of representative anchors D;

$\lambda_{RX}$ (D) defines the receiver semantic information in the receiver semantic space $\mathcal{Y}$ corresponding to the set of representative anchors D;

$T_{TX}^{(k)} \circ \lambda_{TX}(D)$ $\lambda_{TX}(D)$ is an image of the set of representative anchors D in the semantic common ground space $\mathcal{G}$ for level k;

$T_{RX}^{-1(k)} \circ \lambda_{RX}(D)$ is a pre-image in the semantic common ground space $\mathcal{G}$ of the receiver semantic information corresponding to the set of representative anchors D for level k.

According to one embodiment, each transmitter semantic infomation $x_i$ in the transmitter semantic space $\mathcal{X}$ is mapped into a series of n semantic symbols, each receiver semantic information $y_i$ in the receiver semantic space $\mathcal{Y}$ is mapped into a series of q semantic symbols and each common semantic information $g_i$ in the semantic common ground space $\mathcal{G}$ is mapped into a series of p semantic symbols, with p strictly inferior to n and p strictly inferior to q.

In other words, the dimension p of the semantic common ground space $\mathcal{G}$ is strictly inferior to the dimension n of the transmitter semantic space X, and the dimension p of the semantic common ground space $\mathcal{G}$ is strictly inferior to the dimension q of the receiver semantic space $\mathcal{Y}$ .

Thanks to this provisions, semantic compression is operated over the semantic channel, thanks to the reduced dimension of the semantic common ground space $\mathcal{G}$ compared to respectively both transmitter semantic space $\mathcal{X}$ and receiver semantic space $\mathcal{Y}$ .

In other words, these provisions allows for transmission bandwidth optimization over the physical wireless communication channel

According to one possibility, the selection of the subset of data pertaining to the data space as a set of representative anchors D comprises the following steps:

- partitioning the semantic common ground space $\mathcal{G}$ into a number of sub-zones identified by category prototypes;

- selecting a density of semantic pilots per category prototype;

- associating each sub-zone of the semantic common ground space $\mathcal{G}$ to a subset of representative anchors in the data space $\mathcal{M}$ .

According to one possibility, selecting the density of semantic pilots per category prototype depends on one of: the dimension of the transmitter semantic space, the dimension of the semantic common ground space, the dimension of the receiver semantic space.

According to a second aspect of the invention, a second object of the invention relates to a semantic channel equalization method for correcting at least one semantic distortion taking place on a semantic channel, said method comprising:

- the steps of the semantic channel estimation method described above;

- a step of deciding to perform at least one semantic channel equalization operation based on a value of the semantic channel link quality metric.

According to one possibility, said at least one semantic channel equalization operation can be performed at the transmitter-side on the basis of a definition of at least one equalization transformation $T_{TXSemEQ}$ needed at the receiver-side to compensate misalignment(s) between transmitter semantic space $\mathcal{X}$ and receiver semantic space $\mathcal{Y}$ .

According to another possibility, said at least one semantic channel equalization operation can be performed at the receiver-side on the basis of a definition of at least one equalization transformation $T_{RXSemEQ}$ needed at the receiver-side to compensate misalignment(s) between transmitter semantic space $\mathcal{X}$ and receiver semantic space $\mathcal{Y}$ .

According to yet another possibility, said at least one semantic channel equalization operation comprises at least one semantic channel equalization operation to be performed at the transmitter-side and at least one semantic channel equalization operation to be performed at the receiver-side.

According to one embodiment, the semantic channel equalization method further comprises a step of comparing the value of the semantic channel link quality metric to a predetermined threshold.

According to one embodiment, the semantic channel equalization method further comprises a step of performing said semantic channel equalization operation only if the value of the semantic channel link quality metric is below the predetermined threshold.

According to another possibility, the semantic channel equalization method further comprises a step of performing said semantic channel equalization operation only if the value of the semantic channel link quality metric is above the predetermined threshold.

According to a third aspect of the invention, a third object of the invention relates to a computer program product directly loadable into the internal memory of a processor, comprising software code portions for performing the steps of the above described methods when said computer program product is run on a processor.

It goes without saying that the different aspects the invention defined above not incompatible can be combined.

The invention will be better understood with the aid of the detailed description that is set out below with reference to the appended drawing.

### Brief description of the drawings

With reference to the appended drawings, below follows a more detailed description of a preferred embodiment of the invention cited as an example.

In the drawings:

Figure 1a gives a full overview of a wireless communication system including semantic communication;

Figure 1b represents a semantic communication diagram;

Figure 1c represents the transmitter side of a semantic wireless communication chain;

Figure 2a represents an example of two different transmitter language models;

Figure 2b is an example of two semantic communication applications departing from a same data space;

Figure 3 represents the link between the transmitter semantic space, the common ground space, and the receiver semantic space.

### Detailed description of example embodiments of the invention

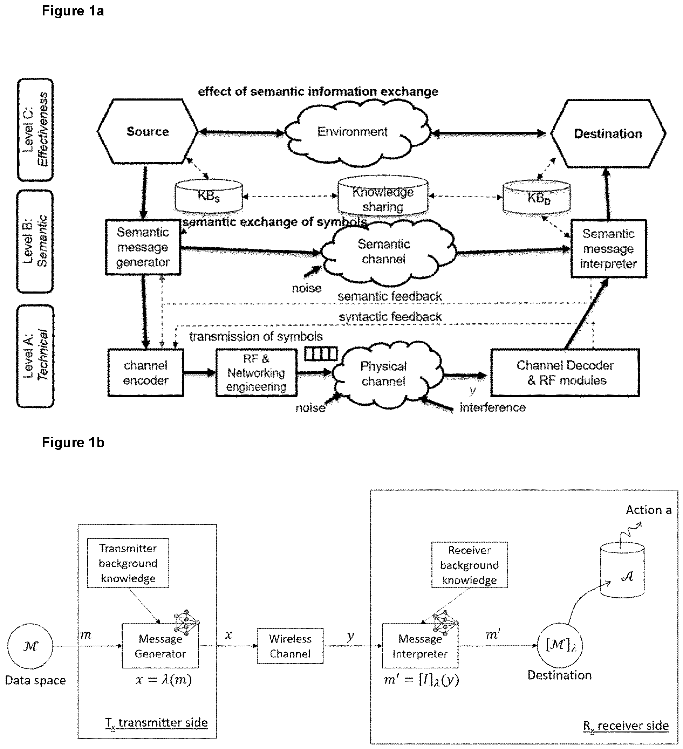

Figure 1a shows schematically the existence, in a wireless communication system, of the three levels of communication as categorized by Shannon back in 1948. The level A, or technical problem, focuses mainly on the correct transmission of symbols from the transmitter to the receiver. In other word, different technical units, such as a channel encoder and a channel decoder are used to ensure that symbols are accurately and effectively transmitted to the receiver.

The level B, or semantic problem, focuses on the exchange of semantic information between the transmitter and the receiver, and introduces technical units such as a semantic message generator and a semantic message interpreter used to ensure that meanings are correctly exchanged between transmitter and receiver. In other word, the level B, or semantic problem, aims to ensure that useful information is sent by the transmitter, and that the receiver is able to correctly interpret this information.

The level C, or effectiveness problem, focuses on the effect of the semantic information exchange between the transmitter and the receiver, and precisely on the decision(s) that should be taken by the receiver based on the received semantic information. In fact, the receiver does not have only to be able to correctly interpret the information, but also to take the expected decision(s) based on it. For example, and as represented on Figure 1b, the receiver should take a right action a on the basis on the interpreted semantic information $m' \in [\mathcal{M}]_\lambda$.

The present invention focuses mainly on the level B: the semantic problem. Including semantics in a wireless communication process requires to add specialized components and dedicated data structures.

For example, and as represented on Figure 1b, a semantic message generator is present at the transmitter side, while a semantic message interpreter is present at the receiver side.

A data space M, as a source of data, contains a set of observation data that can be observed by the transmitter $T_x$. In other words, at least some of the data contained in the data space M are observable by the transmitter $T_x$, which is able to extract knowledge out of these observable data. More precisely, the semantic message generator comprises a semantic information extractor able to extract semantic information x out of each observable data m contained in the data space M on the basis of a transmitter language function $\lambda : x = \lambda(m)$.

In order to know precisely which observable data m of the data space $\mathcal{M}$ should be taken into consideration, the transmitter $T_x$ has access to a transmitter background knowledge space which contains useful information for the transmitter $T_x$ such as for example which kind of semantic information is expected by the receiver and when they are expected. More generally, the transmitter background knowledge space complements the actual instance of observation of the transmitter $T_x$, and conditions the way semantic extraction is performed by the semantic information extractor.

Once the semantic information extractor has associated a semantic information x to the observed observable data m, the semantic message generator generates semantic symbols in order to semantically represent said semantic information x.

In other word, the extracted semantic information x is mapped into a series of semantic symbols that forms the semantic message.

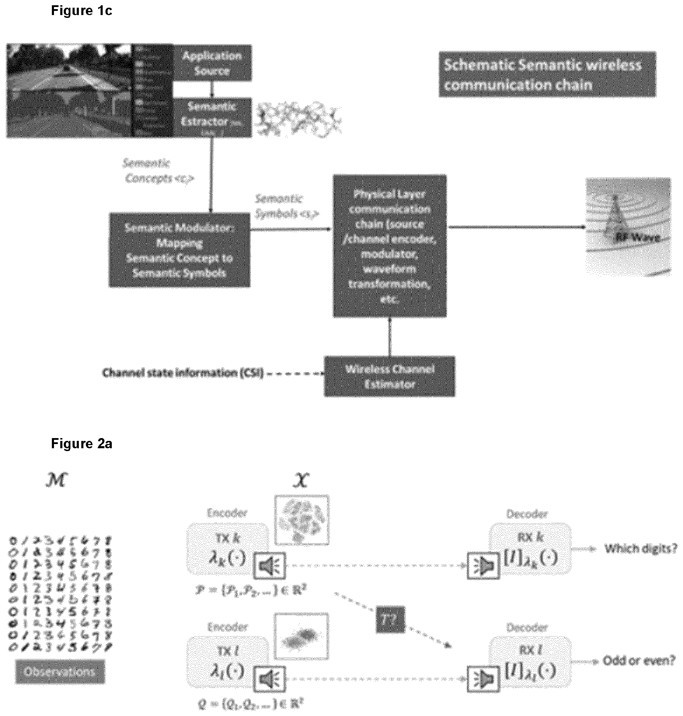

As represented on Figure 1c, the semantic message is encoded by the channel encoder resulting encoded semantic message is then modulated by a modulator to form a modulated signal containing said semantic message, and a resulting waveform signal is generated by a waveform transformation unit and then sent on the physical wireless channel toward the receiver.

Once the sent waveform signal is received at the receiver side, the waveform signal is demodulated by a demodulator and decoded by the channel decoder to obtain a decoded semantic message.

The series of semantic symbol forming the decoded semantic message is then demapped to obtain a received semantic information y that has to be interpreted by the semantic message interpreter on the $R_x$ receiver side. Once the semantic interpretation is done, an appropriate action a can be selected out of an action space A and performed by the receiver.

In order to interpret the received semantic information y, the semantic message interpreter uses a receiver language function $[l]_\lambda$, that can be similar or different to the transmitter language function $\lambda$, applied to deliver an interpreted semantic information m' : $m' = [l]_\lambda(y)$ .

The present invention advantageously applies to the case when the transmitter and the receiver uses different languages and thus different language functions, which complicates the task of semantic message interpretation performed by the semantic message interpreter which cannot properly interpret, based on its own receiver language function $[l]_\lambda$, the semantic information included in the semantic message generated by the transmitter based on its own transmitter language function $\lambda$.

The receiver has access to a receiver background knowledge space which contains background knowledge useful for the receiver, such as for example information on how to perform semantic interpretation and which task or action are associated to which interpreted semantic information.

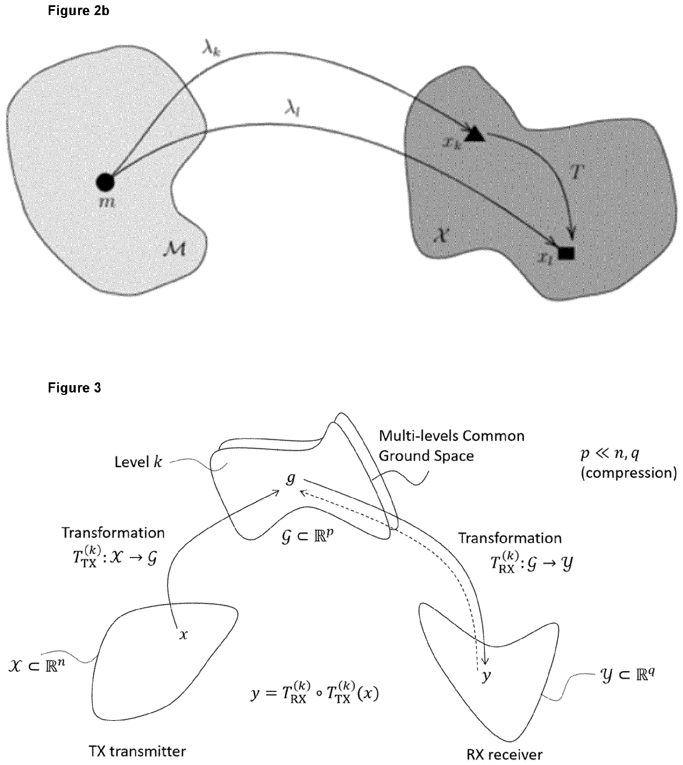

An example of two transmitters each extracting different semantic information from a same data space is introduced by Figures 2a and 2b, where two transmitters, respectively $TX_k$ and $TX_l$, depart initially from the same data space $\mathcal{M}$ comprising digit images which are observable data for both the transmitter $TX_k$ and the transmitter $TX_l$.

For each digit image comprised in the data space M, the transmitter $TX_k$ uses its own transmitter language function $\lambda_k$ to extract semantic information $x_k$ corresponding to the actual observed digit. In other words, for each observed digit image, the semantic information extractor of the transmitter $TX_k$ extracts the corresponding digit. Here the transmitter language $\lambda_k$ is a one-to-one or bijective function $\lambda_k : \mathcal{M} \to \mathcal{X}_k$ , where $\mathcal{X}_k$ is $TX_k$ transmitter semantic space.

N.B: Even if Figure 2b represents transmitters $TX_k$ and $TX_l$ as sharing a same transmitter semantic space $\mathcal{X}$ that contains both semantic information $x_k$ and $x_l$, both transmitters $TX_k$ and $TX_l$ could also be represented each with their own transmitter semantic space: respectively $TX_k$ transmitter semantic space $\mathcal{X}_k$ containing semantic information $x_k$, and $TX_l$ transmitter semantic space $\mathcal{X}_l$ containing semantic information $x_l$.

For each digit image comprised in the data space M, the semantic information extractor of the transmitter $TX_l$ extracts semantic information $x_l$ corresponding to the actual parity of the observed digit: odd or even. Here the transmitter language function $\lambda_l$ is a many-to-one function: $\lambda_l : \mathcal{M} \to \mathcal{X}_l$ , where $\mathcal{X}_l$ is $TX_l$ transmitter semantic space. In other words, a same semantic information (odd) is associated to different observable data of the data space: 1, 3, 5...

Though both transmitters $TX_k$ and $TX_l$ act on the same observations of the world, they structure differently their underlying observations and their respective semantic message generators generate two different semantic messages, comprising two different series of semantic symbols, destined to their respective associated receivers $RX_k$ and $RX_l$.

On one hand, the receiver $RX_k$ receives the semantic message generated by the transmitter $TX_k$, and, based on its receiver language and receiver background knowledge interprets this semantic message in order to recover the actual digit observed by the transmitter.

In this case corresponding to what is called a pragmatic approach or pragmatic semantic strategy, the transmitter $TX_k$ conditions its semantic extraction strategy to the goal of the receiver $RX_k$ in order to maximize the understanding at the receiver of the semantic message.

To interpret the semantic message sent by the transmitter $TX_k$, the receiver $RX_k$ uses a receiver language function $[I]_{\lambda k}: X \to [\mathcal{M}]_{\lambda k}$ .

In that specific simple case, $[\mathcal{M}]_{\lambda k}$ is similar to M and the $RX_k$ receiver language function $[I]_{\lambda k}$ is the inverse function of the $TX_k$ transmitter language function $\lambda_k$. In fact, the transmitter and the receiver uses a same language, and their respective semantic spaces are perfectly aligned.

On the other hand, the receiver $RX_l$ receives the semantic message generated by the transmitter $TX_l$, and, based on its receiver language and receiver background knowledge interprets this semantic message in order to recover the parity - odd or even- of the digit observed by the transmitter.

Also in this case, the transmitter $TX_k$ conditions its semantic extraction strategy to the goal of the $RX_l$ receiver in order to maximize the understanding at the receiver of the semantic message.

To interpret the semantic message sent by the transmitter $TX_l$, the receiver $RX_l$ uses a receiver language function $[I]_{\lambda l}: X \to [\mathcal{M}]_{\lambda l}$ . In this case also, the transmitter and the receiver uses a same language, and their respective semantic spaces are perfectly aligned.

Let's now consider the case in which the receiver $RX_l$, which expects a semantic message containing a semantic information on the parity of an observed digit, receives and tries to interpret a semantic message generated and sent by the transmitter $TX_k$, which contains a semantic information corresponding to the actual observed digit. In that case also called non-pragmatic approach or non-pragmatic semantic strategy, the transmitter $TX_k$ clearly ignores the goal of the receiver and thus cannot condition its semantic extraction strategy to the particular needs of the receiver. Also, we understand here that $TX_k$ transmitter language and $RX_l$ receiver language are different languages.

An even more complicated case of non-pragmatic semantic strategy would be that the receiver $RX_k$, which expects a semantic message containing a semantic information corresponding to the actual observed digit would in fact receive and try to interpret a semantic message generated and sent by the transmitter $TX_l$ which contains a semantic information on the parity of an observed digit. Also, we understand here that $TX_l$ transmitter language and $RX_k$ receiver language are different languages.

The present invention deals with such complicated cases where transmitters and receivers that don't share the same language have to exchange semantic messages on a semantic channel. More specifically, the invention relates to a semantic channel estimation method that takes into account the language mismatches between transmitters and receivers that lead to semantic space misalignements.

As illustrated on Figure 2b, transmitters $TX_k$ and $TX_l$ respectively extract different semantic information $x_k, x_l$ from a same observable data m, and a transformation T is necessary to shift from the semantic information $x_k$ to the semantic information $x_l$. More broadly, for each observable data $m_i$ belonging to the data space M, a transformation $T_i$ is necessary to shift from semantic information $x_{ki}$ to semantic information $x_{li}$.

Such transformations are operated throughout a semantic communication chain between a transmitter $T_x$ and a receiver $R_x$ every time said transmitter sends a semantic message to said receiver.

As illustrated on Figure 3, the transmitter semantic infomation x in the transmitter semantic space $\mathcal{X}$ is mapped into a series of n semantic symbols ( $\mathcal{X} \subset \mathbb{R}^n$ ), while the receiver semantic information y in the receiver semantic space $\mathcal{Y}$ is mapped into a series of q semantic symbols ( $\mathcal{Y} \subset \mathbb{R}^q$ ).

A multi-level semantic common ground space $\mathcal{G}$ is defined, as an intermediate semantic space, based on the transmitter semantic space X and on the receiver semantic space $\mathcal{Y}$ .

For each level k, the multi-level semantic common ground space contains common semantic information g intented to be exchanged over the semantic channel.

Each common semantic information g in the semantic common ground space $\mathcal{G}$ is mapped into a series of p semantic symbols ( $\mathcal{G} \subset \mathbb{R}^p$ ), p being strictly inferior to n and to q, in order to allow semantic compression over the semantic channel.

For each level k, a set of transmitter-side transformations $T^{(k)}_{TX}$ and a set of receiver-side transformations $T^{(k)}_{RX}$ are operated on the semantic communication chain.

More precisely and for each level k, the set of transmitter-side transformations $T^{(k)}_{TX}$ are operated in order to shift from a set of transmitter semantic information x in the transmitter semantic space $\mathcal{X}$ to a corresponding set of common semantic information g in the semantic common ground space $\mathcal{G}$ .

Also, the set of receiver-side transformations $T^{(k)}_{RX}$ are operated in order to shift from the set of common semantic information g in the semantic common ground space $\mathcal{G}$ to a corresponding set of receiver semantic information y in the receiver semantic space $\mathcal{Y}$.

The receiver semantic information y is then interpreted by semantic interpreter of the receiver in order for the receiver to perform a task or action related to said level k.

Besides allowing semantic compression over the semantic channel, the definition of the multi-level semantic common ground space $\mathcal{G}$ allows to model the semantic channel in a simple way:

$$y = T_{RX}^{(k)} \circ T_{TX}^{(k)}(x)$$

Moreover, the definition of the multi-level semantic common ground space $\mathcal{G}$ allows for effective and significant semantic channel estimation at least based on said set of transmitter-side transformations $T^{(k)}{}_{TX}$ and said set of receiver-side transformations $T^{(k)}{}_{RX}$.

For example, the following formula may be applied to compute a semantic channel link quality metric for the level k:

$$\mathrm{LQM}_{\mathrm{sem}}^{(k)} = \frac{\mu\left(T_{TX}^{(k)} \circ \lambda_{TX}(D) \cap T_{RX}^{-1(k)} \circ \lambda_{RX}(D)\right)}{\mu\left(T_{TX}^{(k)} \circ \lambda_{TX}(D)\right)}$$

Where:

$$\mathrm{LQM}_{\mathrm{sem}}^{(k)} \in [0,1];$$

$\mu$ defines a probility measure over the common ground space $\mathcal{G}$;

$\lambda_{TX}$ (D) defines the transmitter semantic information in the transmitter semantic space x corresponding to the set of representative anchors D;

$\lambda_{RX}$ (D) defines the receiver semantic information in the receiver semantic space $\mathcal{Y}$ corresponding to the set of representative anchors D;

$T_{TX}^{(k)} \circ \lambda_{TX}(D)$ is an image of the set of representative anchors D in the semantic common ground space $\mathcal{G}$ for level k;

$T_{RX}^{-1(k)} \circ \lambda_{RX}(D)$ is a pre-image in the semantic common ground space $\mathcal{G}$ of the receiver semantic information corresponding to the set of representative anchors D for level k.

Then, based on the computed value of $\mathrm{LQM}_{\mathrm{sem}}^{(k)}$, it can be automatically decided to perform or not a semantic channel equalization.

The invention is not limited to the embodiments described above and represented in the figures. The present invention applies to any multi-user semantic communication system where cooperating agents interact through the exchange of semantic messages to convey meanings, share knowledge and cooperate to achieve a goal. Practical applications of the present invention can be implemented in many technical fields of the telecommunication sector, such as robotic with cooperative-robots, the automotive with autonomous vehicle, extended reality with the Metaverse.

**Claims**

1. Semantic channel estimation method for estimating the quality of a semantic channel on which a transmitter Tx and a receiver Rx establish a semantic communication for exchanging at least one semantic message including transmitter semantic information $x_i$, said transmitter semantic information $x_i$ being extracted by the transmitter Tx from a data space $\mathcal{M}$ containing transmitter observable data $m_i$, said transmitter semantic information $x_i$ being extracted based on a transmitter language function $\lambda_{TX}$ that associates to each observable data $m_i$ a transmitter semantic information $x_i$, the method comprising the following steps:

   - Definition of a transmitter semantic space $x$ based at least on the data space M and on the transmitter language function $\lambda_{TX}$, the transmitter semantic space $x$ containing all the transmitter semantic information $x_i$ that can be extracted from the observable data $m_i$ in the data space M;

   - Definition of a receiver semantic space $\mathcal{Y}$ based at least on a receiver language function $\lambda_{RX}$, the receiver semantic space $\mathcal{Y}$ containing receiver semantic information $y_i$ that can be interpreted by the receiver, each receiver semantic information $y_i$ in the receiver semantic space Y being associated to an observable data $m_i$ in the data space M based on the receiver language function $\lambda_{RX}$ ;

   - Definition of a semantic common ground space $\mathcal{G}$ based on the transmitter semantic space X and the receiver semantic space Y, the semantic common ground space $\mathcal{G}$ containing common semantic information $g_i$;
   - Selection of a set of transmitter-side transformation $T_{TX}$ necessary to shift from a set of transmitter semantic information $x_i$ in the transmitter semantic space $\mathcal{X}$ to a corresponding set of common semantic information $g_i$ in the semantic common ground space $\mathcal{G}$ , and of a corresponding set of receiver-side transformation $T_{RX}$ necessary to shift from the set of common semantic information $g_i$ in the semantic common ground space $\mathcal{G}$ to a corresponding set of receiver semantic information $y_i$ in the receiver semantic space Y;
   - Selection of a subset of data pertaining to the data space M as a set of representative anchors D;
   - Computing of a semantic channel link quality metric depending on the set of representative anchors D, the transmitter language function $\lambda_{TX}$, the receiver language function $\lambda_{RX}$, the set of transmitter-side transformation $T_{TX}$, the set of receiver-side transformation $T_{RX}$.

2. Semantic channel estimation method according to claim 1, wherein the step of computing a semantic channel link quality metric comprises the application of the following formula:

$$\mathrm{LQM}_{\mathrm{sem}} = \frac{\mu\big(T_{TX} \circ \lambda_{TX}(D) \cap T_{RX}^{-1} \circ \lambda_{RX}(D)\big)}{\mu\big(T_{TX} \circ \lambda_{TX}(D)\big)}$$

Where:

   - $\mathrm{LQM}_{\mathrm{sem}} \in [0,1]$;

   - $\mu$ defines a probility measure over the common ground space $\mathcal{G}$ .
   - $\lambda_{TX}(D)$ defines the transmitter semantic information in the transmitter semantic space $x$ corresponding to the set of representative anchors D;

   - $\lambda_{RX}(D)$ defines the receiver semantic information in the receiver semantic space $\mathcal{Y}$ corresponding to the set of representative anchors D;

   - $T_{TX} \circ \lambda_{TX}(D)$ is an image of the set of representative anchors D in the semantic common ground space $\mathcal{G}$ ;

   - $T_{RX}^{-1} \circ \lambda_{RX}(D)$ is a pre-image in the semantic common ground space $\mathcal{G}$ of the receiver semantic information corresponding to the set of representative anchors D.

3. Semantic channel estimation method according to claim 1 or claim 2, wherein

- each transmitter semantic infomation $x_i$ in the transmitter semantic space $x$ is mapped into a series of n semantic symbols;

- each receiver semantic information $y_i$ in the receiver semantic space $\mathcal{Y}$ is mapped into a series of q semantic symbols;

- Each common semantic information $g_i$ in the semantic common ground space $\mathcal{G}$ is mapped into a series of p semantic symbols, with p strictly inferior to n and p strictly inferior to q.

4. Semantic channel equalization method for correcting at least one semantic distortion taking place on a semantic channel, said method comprising:

- The steps of the semantic channel estimation method according to any one of claims 1 to 4;
- A step of deciding to perform a semantic channel equalization operation based on a value of the semantic channel link quality metric.

5. Semantic channel equalization method according to claim 5, further comprising a step of comparing the value of the semantic channel link quality metric to a predetermined threshold.

6. Semantic channel equalization method according to claim 6, further comprising a step of performing said semantic channel equalization operation only if the value of the semantic channel link quality metric is below the predetermined threshold.

7. A computer program product directly loadable into the internal memory of a processor, comprising software code portions for performing the steps of the method of any of the preceding claims when said computer program product is run on a processor.

**Figure 1a**

**Figure 1b**

**Figure 1c**

**Figure 2a**

**Figure 2b**

**Figure 3**

$$y = T_{RX}^{(k)} \circ T_{TX}^{(k)}(x)$$

Europäisches
Patentamt

European
Patent Office

Office européen
des brevets

# EUROPEAN SEARCH REPORT

**Application Number**

EP 24 30 6989

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MOHAMED SANA ET AL: "Semantic Channel Equalizer: Modelling Language Mismatch in Multi-User Semantic Communications", ARXIV.ORG, CORNELL UNIVERSITY LIBRARY, 201 OLIN LIBRARY CORNELL UNIVERSITY ITHACA, NY 14853, 4 August 2023 (2023-08-04), XP091589170, * page 2 - page 6; figure 3 * | 1-7 | INV. H04L1/00 |
| X | EP 4 447 349 A1 (COMMISSARIAT ENERGIE ATOMIQUE [FR]) 16 October 2024 (2024-10-16) * pages 8-9; figure 4 * | 1-7 | |
| A | TOM\'AS HUTTEBRAUCKER ET AL: "Soft Partitioning of Latent Space for Semantic Channel Equalization", ARXIV.ORG, CORNELL UNIVERSITY LIBRARY, 201 OLIN LIBRARY CORNELL UNIVERSITY ITHACA, NY 14853, 30 May 2024 (2024-05-30), XP091772862, * pages 1,2 * | 1-7 | |

**TECHNICAL FIELDS SEARCHED (IPC)**

H04L

The present search report has been drawn up for all claims

| Place of search | Date of completion of the search | Examiner |
|---|---|---|
| Munich | 7 May 2025 | Flores Sanchez, L |

EPO FORM 1503 03.82 (P04C01)

**EP 4 753 180 A1**

## ANNEX TO THE EUROPEAN SEARCH REPORT
## ON EUROPEAN PATENT APPLICATION NO.

EP 24 30 6989

07-05-2025

| Patent document cited in search report | Publication date | Patent family member(s) | Publication date |
|---|---|---|---|
| EP 4447349          A1 | 16-10-2024 | NONE | |

For more details about this annex : see Official Journal of the European Patent Office, No. 12/82